# EUROPEAN PATENT APPLICATION

(11) **EP 1 251 422 A2**
(43) Date of publication of application: **23.10.2002**
(21) Application number: 02008212.9
(22) Date of filing: 17.04.2002
(51) Int. Cl.: G06F 1/00

(54) **Copyright protection system and method thereof**

(30) Priority: 19.04.2001 JP 2001121061
(71) Applicant: NEC CORPORATION, Tokyo (JP)
(72) Inventor: Morishita, Takuya, Minato-ku, Tokyo (JP); Miyauchi, Hiroshi, Minato-ku, Tokyo (JP); Minematsu, Kazuhiko, Minato-ku, Tokyo (JP); Obana, Satoshi, Minato-ku, Tokyo (JP)
(74) Representative: VOSSIUS & PARTNER

(57) **Abstract**

It is characterized to comprise an authentication device 4 having invalid information of a key in relation to cryptology, and for disapproving authentication in case that information of an authentication key is included in the invalid information, which is used for authentication when a first cryptographic key in relation to encrypting is shared between a first encrypting device 3 and a first decryption section 11, and an certificate revocation list updating device 5 for updating contents of the invalid information in the authentication device 4 when receiving information of a key of an object to be invalidated, which is provided together with an input data in relation to a work.

## Description

The present invention relates to a copyright protection system and a method thereof for protecting a copyright of a work provided by a broadcast or the like by means of encrypting.

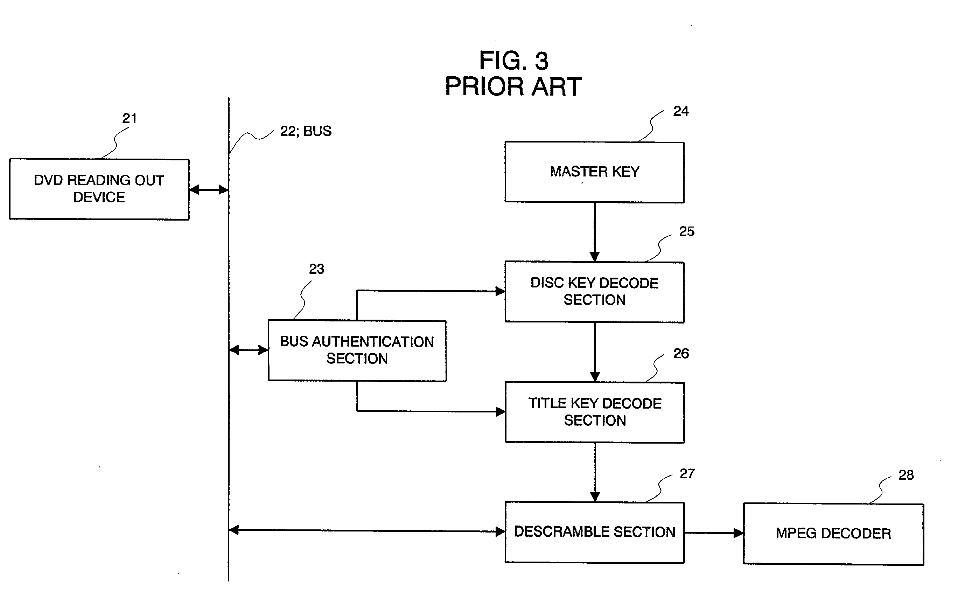

Fig. 3 is a block diagram showing an arrangement example of a conventional copyright protection system. The copyright protection system shown in Fig. 3 is for protecting a copyright of a work recorded in a DVD (Digital Versatile Disc). Generally, in selling a work recorded in the DVD, in order to prevent the work from being unjustly used by a third party who bears ill will, after a data of the work such as a video and audio is encrypted, it is recorded in the DVD. Also, a disc key and a title key necessary for the decryption of the recorded data are encrypted and recorded in the DVD.

The conventional copyright protection system in Fig. 3 comprises a DVD reading out device 21, a bus 22, a bus authentication section 23, a master key 24, a disc key decode section 25, a title key decode section 26, a descramble section 27, and an MPEG decoder 28. The DVD reading out device 21, the bus authentication section 23 and the descramble section 27 are connected to the bus 22, respectively, and data transmission can be conducted via this bus 22. The bus authentication section 23 and the descramble section 27 acquire a data read out from a DVD by the DVD reading out device 21 via the bus 22.

Next, an operation of the above-described conventional copyright protection system shown in Fig. 3 will be explained.

First, the bus authentication section 23 conducts mutual authentication with the DVD reading out device 21 via the bus 22, and shares a time-variant key for transmitting a key via the bus 22. Next, the bus authentication section 23 reads out and acquires encrypted disc key and title key from the DVD by means of the DVD reading out device 21, and provides the disc key to the disc key decode section 25, and provides the title key to the title key decode section 26. The disc key decode section 25 decrypts the cryptology of the disc key by means of the master key 24, and decodes the disc key. The title key decode section 26 acquires the decoded disc key from the disc key decode section 25, and decrypts the cryptology of the title key by means of this disc key and decodes the title key, and provides this title key to the descramble section 27.

Next, by means of the title key, the descramble section 27 decrypts the cryptology of an encrypted data of a work from the DVD by means of the DVD reading out device 21, and outputs it to the MPEG decoder 28. The MPEG decoder 28 regenerates a video or audio by using the data in which the cryptology is decrypted.

As mentioned above, in the conventional copyright protection system, the disc key recorded in the DVD and the master key necessary for the decryption of the title key are provided, and it is constructed so that, without this master key, the disc key and the title key cannot be decoded and the cryptology of the data of a work recorded in the DVD cannot be decrypted. Also, since the data transmitted on the bus 22 is encrypted, even though the data is acquired from the bus 22, from the data it is difficult to acquire a data of the work, which can be regenerated.

In this manner, the conventional copyright protection system prevents a work from being unjustly used by a third party who bears ill will.

Also, the above-described copyright protection system in Fig. 3 can provide a processing apparatus capable of executing a program, and this processing apparatus can execute a program for realizing respective functions of the sections 23 and 25 to 28, respectively, to establish the respective sections 23 and 25 to 28. Thereby, it is possible to provide the copyright protection system in Fig. 3 with an information processing apparatus such as a personal computer.

However, in the above-mentioned conventional copyright protection system, in case that an authentication method or an encrypting method is deciphered by an analysis of a program by a third party who bears ill will, it is difficult to change a plurality of keys (master key) and programs in relation to the cryptology of the copyright protection systems being already utilized, and there is a task that unjust use of a work cannot be prevented.

Accordingly, in case that an authentication method or an encrypting method is deciphered and a work is unjustly used, the establishment of a copyright protection system is required, which can invalidate a key in relation to the cryptology of the copyright protection system and prevent further unjust use more than this of the work.

Also, with regard to the copyright protection of a work, such as a video and audio of a broadcast program, which is provided by a broadcast, a countermeasure against the record and regeneration thereof cannot be made, and the establishment of a copyright protection system is required, which can execute the copyright protection in relation to the record and regeneration.

The present invention was made by considering such circumstances, and the objective thereof is to provide a copyright protection system and a method thereof, which can invalidate a key in relation to the cryptology in the system itself. Also, it aims to provide a copyright protection program for realizing the copyright protection system by utilizing a computer.

Also, the present invention aims to provide a copyright protection system and a method thereof, which can simply change keys or programs in relation to the cryptology in a plurality of copyright protection systems. Also, it aims to provide a copyright protection program for realizing the copyright protection system by utilizing a computer.

Also, the present invention aims to provide a copyright protection system and a method thereof, which can execute the copyright protection in relation to record and regeneration. Also, it aims to provide a copyright protection program for realizing the copyright protection system by utilizing a computer.

In order to solve the above-described task, the first invention is a copyright protection system for encrypting an input data in relation to a work, and thereby, protecting a copyright of said work, and is characterized in that the system comprises authentication means having invalid information of a key in relation to cryptology, and for disapproving authentication in case that information of an authentication key is included in said invalid information, which is used for authentication when a first cryptographic key in relation to said encrypting is shared between first encrypting means and first decryption means, and invalid information updating means for updating contents of said invalid information when receiving information of a key of an object to be invalidated, which is provided together with said input data.

The second invention is characterized in that the system comprises authentication key updating means for, when receiving an authentication key for updating, which is provided together with said input data, updating said authentication key.

The third invention is characterized in that the system comprises a processing apparatus for executing a processing program for realizing a function in relation to decryption of said encrypting, and said processing apparatus updates said processing program when receiving a program for updating, which is provided together with said input data.

The fourth invention is characterized in that the system comprises second encrypting means for encrypting said input data using a second cryptographic key, and recording said second cryptographic data in a record medium.

The fifth invention is characterized in that the system comprises second decryption means for decrypting cryptology of said second cryptographic data by means of said second cryptographic key, and said second cryptographic key is held in the system itself.

The sixth invention is a copyright protection method in a copyright protection system for encrypting an input data in relation to a work, and thereby, protecting a copyright of said work, characterized in that the method includes steps of conducting authentication when a first cryptographic key in relation to said encrypting is shared between first encrypting means and first decryption means, disapproving said authentication in case that information of an authentication key used for this authentication is included in invalid information in a key in relation to cryptology, and updating contents of said invalid information when information of a key of an object to be invalidated, which is provided together with said input data, is received.

The seventh invention is characterized in that the method further includes a step of, when receiving an authentication key for updating, which is provided together with said input data, updating said authentication key.

The eighth invention is characterized in that the method further includes steps of receiving a program for updating, which is provided together with said input data, and updating a processing program for realizing a function in relation to decryption of said encrypting by means of this program for updating.

The ninth invention is characterized in that the method further includes steps of encrypting said input data using a second cryptographic key, and recording said second cryptographic data in a record medium.

The tenth invention is characterized in that the method further includes steps of holding said second cryptographic key in the system itself, and decrypting cryptology of said second cryptographic data by means of the second cryptographic key held in the system itself.

The 11th invention is a copyright protection program for executing copyright protection processing in a copyright protection system for encrypting an input data in relation to a work, and thereby, protecting a copyright of said work, characterized in that the program makes a computer execute processing for conducting authentication when a first cryptographic key in relation to said encrypting is shared between first encrypting means and first decryption means, processing for disapproving said authentication in case that information of an authentication key used for this authentication is included in invalid information in a key in relation to cryptology, and processing for updating contents of said invalid information when information of a key of an object to be invalidated, which is provided together with said input data, is received.

The 12th is characterized in that the program further makes the computer execute processing for encrypting said input data using a second cryptographic key, and processing for recording said second cryptographic data in a record medium.

The 13th invention is characterized in that the program further makes the computer execute processing for holding said second cryptographic key in the system itself, and processing for decrypting cryptology of said second cryptographic data by means of the second cryptographic key held in the system itself.

The 14th invention is a copyright protection program for executing copyright protection processing in a copyright protection system for encrypting an input data in relation to a work, and thereby, protecting a copyright of said work, characterized in that the program makes a computer execute processing for receiving an authentication key for updating, which is provided together with said input data, and updating the authentication key.

The 15th invention is characterized in that the program further makes the computer execute processing for receiving a program for updating, which is provided together with said input data, and processing for updating a processing program for realizing a function in relation to decryption of said encrypting by means of this program for updating.

The 16th invention is a record medium stored a copyright protection program for executing copyright protection processing in a copyright protection system for encrypting an input data in relation to a work, and thereby, protecting a copyright of said work, characterized in that the program makes a computer execute: processing for conducting authentication when a first cryptographic key in relation to said encrypting is shared between first encrypting means and first decryption means; processing for disapproving said authentication in case that information of an authentication key used for this authentication is included in invalid information in a key in relation to cryptology; and processing for updating contents of said invalid information when information of a key of an object to be invalidated, which is provided together with said input data, is received.

The 17th invention is characterized in that the program further makes the computer execute: processing for encrypting said input data using a second cryptographic key; and processing for recording said second cryptographic data in a record medium.

The 18th invention is characterized in that the program further makes the computer execute: processing for holding said second cryptographic key in the system itself; and processing for decrypting cryptology of said second cryptographic data by means of the second cryptographic key held in the system itself.

The 19th invention is a copyright protection program for executing copyright protection processing in a copyright protection system for encrypting an input data in relation to a work, and thereby, protecting a copyright of said work, characterized in that the program makes a computer execute: processing for receiving an authentication key for updating, which is provided together with said input data, and updating the authentication key.

The 20th invention is characterized in that the program further makes the computer execute: processing for receiving a program for updating, which is provided together with said input data; and processing for updating a processing program for realizing a function in relation to decryption of said encrypting by means of this program for updating.

By means of these copyright protection programs, the above-mentioned copyright protection system can be realized by using a computer.

This and other objects, features and advantages of the present invention will become more apparent upon a reading of the following detailed description and drawings, in which:
Fig. 1 is a block diagram showing an arrangement of a copyright protection system in accordance with one embodiment of the present invention,
Fig. 2 is a flowchart showing a flow of share processing of a first cryptographic key, which is conducted by the copyright protection system shown in Fig. 1 and
Fig. 3 is a block diagram showing an arrangement example of a conventional copyright protection system.

Referring to the drawings, one embodiment of the present invention will be explained below.

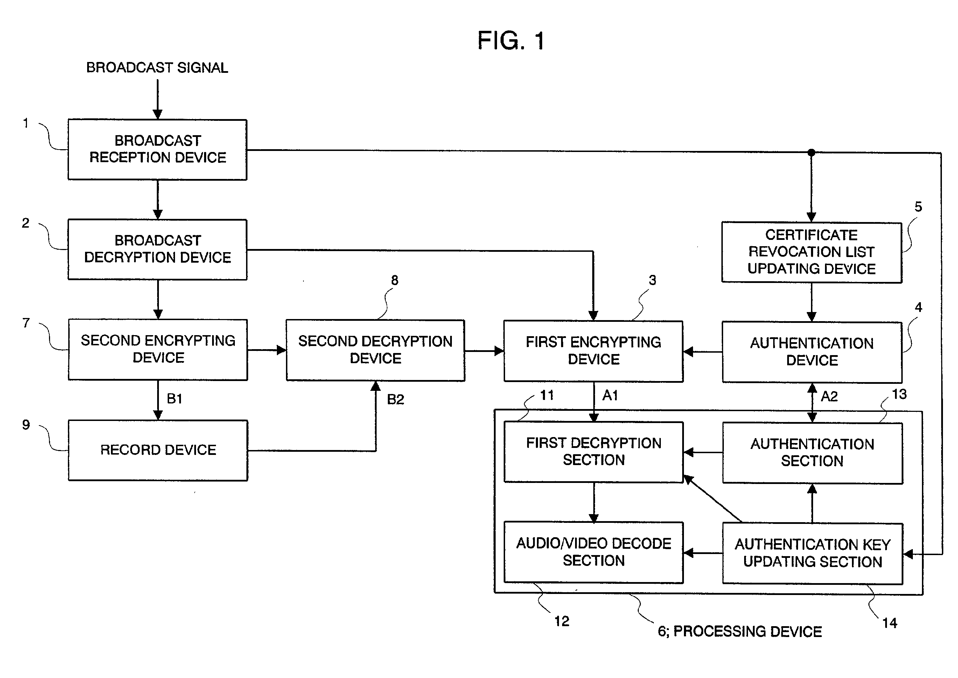

Fig. 1 is a block diagram showing an arrangement of a copyright protection system in accordance with one embodiment of the present invention. In this figure, a code 1 is a broadcast reception device for receiving a broadcast signal. This broadcast signal includes a video data or an audio data which is compressed and encoded, and further encrypted (referred to as a compressed encrypted data, hereinafter). This encrypting is conducted so that only a person who has an audience right can view and listen to. In addition, the above-described broadcast signal can be one transmitted by a radio broadcasting such as television and radio, and a wired broadcasting such as cable television, or can be one transmitted via a communication network such as a wired telephone network, a radio telephone network and internet.

A code 2 is a broadcast decryption device for decrypting the cryptology of the compressed encrypted data received by the broadcast reception device 1, and outputting a video data or an audio data which is compressed and encoded (referred to as a compressed data, hereinafter).

A code 3 is a first encrypting device for applying encrypting to the compressed data output from the broadcast decryption device 2 by using a first cryptographic key, and outputting a first cryptographic data A1. A code 4 is an authentication device for generating the first cryptographic key and providing it to the first encrypting device 3, and encrypting the first cryptographic key by using an authentication key, and outputting the said encrypted first cryptographic key on condition that mutual authentication based on the authentication key is completed. This authentication device 4 has an certificate revocation list D1 in which information of an invalid authentication key is described, and disapproves the said authentication in case that the information of the authentication key used for the mutual authentication is included in this certificate revocation list D1. A code 5 is a certificate revocation list updating device for, when receiving from the broadcast reception device 1 the information of the authentication key of an object to be invalidated, which is included in the broadcast signal, updating the certificate revocation list D1 of the authentication device 4 based on the information.

A code 6 is a processing device constructed of a memory and a CPU (a central processing unit) or the like, and for realizing its function by loading a program in the memory and executing it. This processing device 6 executes a program for realizing the respective functions of a first decryption section 11, an audio/video decode section 12, an authentication section 13 and an authentication key updating section 14.

The first decryption section 11 receives the first cryptographic data A1, and decrypts the cryptology by using the first cryptographic key used for the said encrypting. The audio/video decode section 12 receives the compressed data in which the cryptology is decrypted by the first decryption section 11, and applies extension processing to this data. By means of this extension processing, the compressed data becomes a video data and an audio data which can be regenerated. The audio/video decode section 12 can also conduct regeneration processing of the decoded video data and audio data.

The authentication section 13 transmits and receives a data A2 to and from the authentication device 4, and conducts mutual authentication, and based on the completion of the authentication, acquires from the authentication device 4 the first cryptographic key to be used in the first decryption section 11. This authentication section 13 has an authentication key to be used for the mutual authentication with the authentication device 4. The authentication key updating section 14 updates the authentication key of the authentication section 13 when receiving from the broadcast reception device 1 an authentication key for updating, which is included in the broadcast signal. Also, when receiving from the broadcast reception device 1 a program for updating, which is included in the broadcast signal, the authentication key updating section 14 updates respective programs (a first decryption processing program, an audio/video decode processing program, an authentication processing program and an authentication key updating processing program) of the first decryption section 11, the audio/video decode section 12, the authentication section 13 and the section 14.

A code 7 is a second encrypting device for applying encrypting to the compressed data output from the broadcast decryption device 2 by using a second cryptographic key, and outputting a second cryptographic data B1. This second encrypting device 7 holds the second cryptographic key used for the encrypting in the device. A code 8 is a second decryption device for receiving the second cryptographic key used for the encrypting from the second encrypting device 7, and decrypting the cryptology.

A code 9 is a record device for, when receiving the second cryptographic data B1 from the second encrypting device 7, recording it in a record medium. For this record device 9, a hard disc device, an optical magnetic disc device or a read and write device or the like of a record medium such as a DVD (Digital Versatile Disc) is available.

In addition, an input device, a display device and a speaker or the like (neither of them are shown) are to be connected to the above-described processing device 6 as peripheral devices. Here, the input device means an input device such as a keyboard and a mouse. The display device means a CRT (Cathode Ray Tube), a liquid crystal display device or the like. For such a processing device 6, an information processing device such as a personal computer and a mobile information terminal is available.

Also, out of the above-described devices shown in Fig. 1, the devices 1 to 5, 7 and 8 can be constructed as one device. For example, an electronic circuit for realizing the respective functions of the devices 1 to 5, 7 and 8 is mounted on one substrate, and is to be connected to the processing device 6 and the record device 9. In this manner, by mounting the substrate on an information processing device such as a personal computer, it becomes possible to establish the copyright protection system of Fig. 1.

In addition, the above-described devices 3 to 5, 7 and 8 shown in Fig. 1 can be established by means of an exclusive hardware. Also, these devices 3 to 5, 7 and 8 can be constructed of a memory and a CPU (a central processing unit), and by loading a program for realizing each function of the devices 3 to 5, 7 and 8 in the memory and executing it, the respective functions can be realized. In case of realizing the functions by utilizing . the computer consisting of the CPU or the like in this manner, if the program is stored in an exclusive memory (ROM) for reading, it is possible to prevent the program from being falsified. Otherwise, these devices 3 to 5, 7 and 8 can be established by means of an LSI (a system LSI) in which a CPU and a memory are build.

Next, an operation of the copyright protection system shown in Fig. 1 will be explained. Initially, an operation in which the broadcast signal is received and the contents of the broadcast are regenerated will be explained. First, when receiving the broadcast signal, the broadcast reception device 1 outputs the compressed encrypted data, and the broadcast decryption device 2 decrypts its cryptology and outputs the compressed data.

Next, when receiving the compressed data from the broadcast decryption device 2, the first encrypting device 3 conducts encrypting by using the first cryptographic key provided by the authentication device 4, and outputs the first cryptographic data A1. The first cryptographic key to be used here is a key to be shared with the processing device 6. In addition, an operation for sharing this first cryptographic key will be explained later.

Next, when receiving the first cryptographic data A1 from the first encrypting device 3, the first decryption section 11 of the processing device 6 decrypts the cryptology by using the first cryptographic key shared with the first encrypting device 3. When receiving the compressed data in which the cryptology is decrypted by the first decryption section 11, the audio/video decode section 12 conducts the extension processing, and regenerates a video or audio.

As mentioned above, in this embodiment, since the data (the first cryptographic data A1) output to the processing device 6 from the first encrypting device 3 is encrypted, even though a data is acquired from a transmission medium (a bus or the like capable of transmitting a data) which connects the first encrypting device 3 to the processing device 6, it is difficult to acquire a data of a work, which can be regenerated from the data.

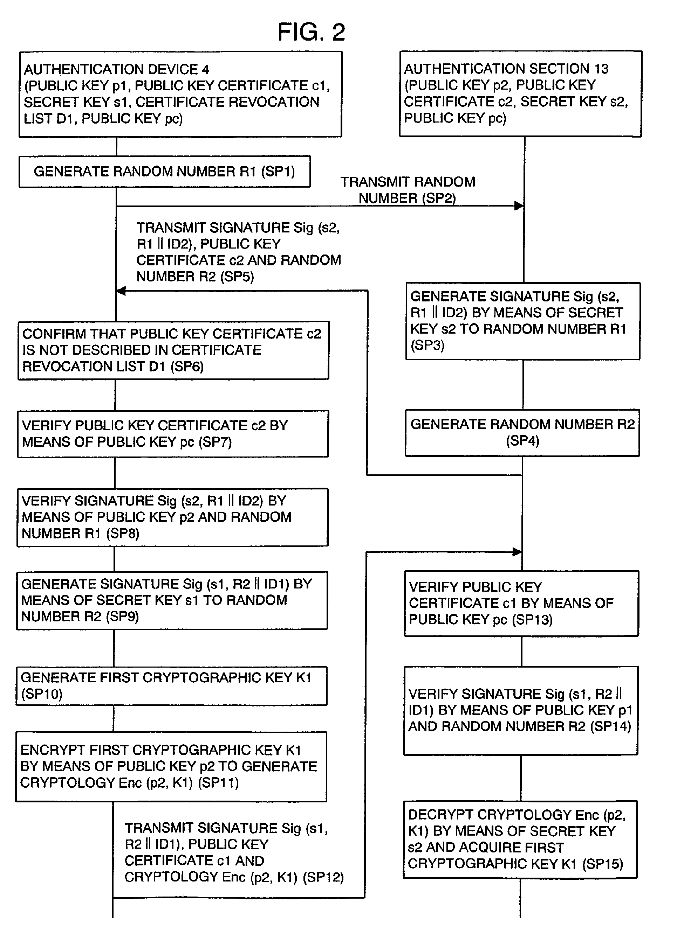

Next, referring to Fig. 2, an operation for sharing the above-described first cryptographic key will be explained. Although the share processing of this first cryptographic key is conducted between the authentication device 4 and the authentication section 13, at this time the authentication device 4 and the authentication section 13 conduct mutual authentication based on the authentication key. Fig. 2 is a flowchart showing a flow of the share processing the first cryptographic key, and shows an example of a case where the first cryptographic key is shared by the mutual authentication by means of a public key cryptographic method. As shown in Fig. 2, the authentication device 4 has a public key p1, a public key certificate c1 a secret key s1, the certificate revocation list D1 and a public key pc. Also, the authentication section 13 has a public key p2, a public key certificate c2, a secret key s2 and a public key pc.

The above-described public key certificate c1 is issued by a third party organization (authentication authorities), in which a signature is added to the public key p1 in advance by means of a secret key sc that this third party organization (authentication authorities) has, and this signature is verified by the public key pc. Similarly, the public key certificate c2 is issued by the third party organization, in which a signature is added to the public key p2 in advance by means of the secret key sc, and this signature is verified by the public key pc. By means of these signatures, the forgery of the public key certificates c1 and c2 is prevented.

The public key p1 and the secret key s1 are a pair of authentication keys. Similarly, the public key p2 and the secret key s2 are also a pair of authentication keys. In addition, the above-described public key p2 and secret key s2 are one of the authentication keys used for the mutual authentication between the authentication device 4 and the authentication section 13, and become keys in relation to the encrypting of the first cryptographic key, which is conducted by the authentication device 4.

Also, in the certificate revocation list D1, information showing an invalid public key certificate c2 is described. Also for this certificate revocation list D1, in order to prevent forgery, a signature is added by the secret key sc that the third party organization has and is issued.

First, the authentication device 4 generates a random number R1, and transmits it to the authentication section 13 (Steps SP1 and SP2 in Fig. 2). Next, the authentication section 13 generates a signature Sig (s2, R1 ∥ ID2) by means of the secret key s2 to the received random number R1. In generating the signature Sig (s2, R1 ∥ ID2), a serial number of the public key certificate c2 can be used for the number ID2. Also, the authentication section 13 generates a random number R2. Next, the authentication section 13 transmits the generated signature Sig (s2, R1 ∥ ID2), the public key certificate c2 and the random number R2 to the authentication device 4 (Steps SP3 - SP5 in Fig. 2).

In addition, the above-described symbol " ∥ " shows a connection of bits. For example, "R1 ∥ ID2" shows bit series in which the random number R1 and the number ID2 are bit-connected to each other, and the signature Sig (s2, R1 ∥ ID2) is one in which a signature is added to the bit series "R1 ∥ ID2" by means of the secret key s2.

Also, a thermal noise can be used for the above-described random numbers R1 and R2, or a pseudo random number can be used. However, in case of using the pseudo random number, although pseudo random number generators are provided in the authentication device 4 and the authentication section 13, respectively, it is required that these pseudo random generators do not coincide with each other.

Next, the authentication device 4 confirms that the received public key certificate c2 is not described in the certificate revocation list D1. Here, in case that the received public key certificate c2 is described in the certificate revocation list D1, the authentication device 4 determines that the said public key p2 is invalid, and disapproves the authentication with the authentication section 13, and ends the processing with the authentication uncompleted. On the other hand, in case that the received public key certificate c2 is not described in the certificate revocation list D1, the authentication device 4 continues the mutual authentication, and conducts processing below (Step SP6 in Fig. 2).

Next, the authentication device 4 verifies the public key certificate c2 by means of the public key pc. Also, it verifies the signature Sig (s2, R1 ∥ ID2) by means of the public key p2 and the random number R1. Here, in case that any one of the results of the verification is abnormal, the authentication device 4 disapproves the authentication with the authentication section 13, and ends the processing with the authentication uncompleted (Steps SP7 and SP8 in Fig. 2).

On the other hand, in case that all of the results of the verification are normal, the authentication device 4 generates a signature Sig (s1, R2 ∥ ID1) by means of the secret key s1 to the random number R2. In generating this signature Sig (s1, R2 ∥ ID1), a serial number of the public key certificate c1 can be used for the number ID1 (Step SP9 in Fig. 2).

Next, the authentication device 4 generates a first cryptographic key K1, and encrypts this first cryptographic key K1 by means of the public key p2 to generate a cryptology Enc (p2, K1). Also, the authentication device 4 provides the generated first cryptographic key K1 to the first encrypting device 3. Next, the authentication device 4 transmits the signature Sig (s1, R2 ∥ ID1), the public key certificate c1 and the cryptology Enc (p2, K1) to the authentication section 13 (Steps SP10 - SP12 in Fig. 2).

Next, the authentication section 13 verifies the received public key certificate c1 by means of the public key pc. Also, it verifies the signature Sig (s1, R2 ∥ ID1) by means of the public key p1 and the random number R2. Here, in case that any one of the results of the verification is abnormal, the authentication section 13 disapproves the authentication with the authentication device 4, and ends the processing with the authentication uncompleted (Steps SP13 and SP14 in Fig. 2).

On the other hand, in case that all of the results of the verification are normal, the authentication section 13 decodes the cryptology Enc (p2, K1) by means of the secret key s2 and acquires the first cryptographic key K1, and provides this first cryptographic key K1 to the first decryption section 11 (Step SP15 in Fig. 2). Thereby, the first cryptographic key K1 generated by the authentication device 4 is shared between the first encrypting device 3 and the first decryption section 11.

In addition, in the above-mentioned embodiment, although the authentication in the share processing of the first cryptographic key is conducted by the mutual authentication by means of the public key cryptographic method, the authentication method is not limited to the public key cryptographic method.

Next, an operation for invalidating the authentication key that the authentication section 13 has will be explained. This authentication key of an object to be invalidated is one of the authentication keys used for the mutual authentication between the authentication device 4 and the authentication section 13, and becomes a key in relation to the encrypting of the first cryptographic key, which is conducted by the authentication device 4. In the above-described example of the mutual authentication by means of the public key cryptographic method, which was shown in Fig. 2, it is indicated by the public key p2 and the secret key s2.

There is a case where a third party who bears ill will unjustly acquires the authentication key of the authentication section 13 in the copyright protection system of Fig. 1, and by using the authentication key, shares the first cryptographic key with the authentication device 4 and decrypts the cryptology of the first cryptographic data A1, and unjustly uses a work such as a video and audio of a broadcast program. In such a case, in order to prevent the unjust use of the work more than this, a broadcasting business proprietor broadcasts so as to include the information of the authentication key of an object to be invalidated and the authentication key for updating in a broadcast signal. An operation of the copyright protection system in Fig. 1 will be explained below.

In case that the information of the authentication key of an object to be invalidated is included in the received broadcast signal, the broadcast reception device 1 outputs the information to the certificate revocation list updating device 5. When receiving the information of the authentication key of the object to be invalidated from the broadcast reception device 1, based on this information, the certificate revocation list updating device 5 updates the certificate revocation list D1 of the authentication device 4. Thereby, the authentication key that the authentication section 13 has is invalidated.

Also, in case that the authentication key for updating is included in the received broadcast signal, the broadcast reception device 1 outputs the authentication key for updating to the authentication key updating section 14 of the processing device 6. When receiving the authentication key for updating from the broadcast reception device 1, the authentication key updating section 14 updates the authentication key of the authentication section 13. Thereby, the authentication key that the authentication section 13 has becomes a valid authentication key.

Accordingly, in case that a third party who bears ill will uses a work by means of the authentication key which was unjustly obtained, since the invalidated authentication key is used in sharing the first cryptographic key between the authentication device 4 and the authentication section 13, the authentication device 4 disapproves the mutual authentication with the authentication section 13 in the above-described step SP6 in Fig. 2, and does not provide the first cryptographic key to the authentication section 13. As a result, the first decryption section 11 does not acquire the first cryptographic key used for the encrypting by the first encrypting device 3, and it becomes impossible to decrypt the cryptology of the first cryptographic data A1. Thereby, even though the authentication method and the encrypting method are deciphered and a work is unjustly used by a third party who bears ill will, the authentication key (the key in relation to the cryptology) is invalidated, and an advantage that further unjust use of a work more than this can be prevented is obtained.

Also, as mentioned above, according to the copyright protection system in accordance with this embodiment, by means of the information of the authentication key of an object to be invalidated and the authentication key for updating, which are included and provided in the broadcast signal, the invalidating of the authentication key and the change thereof are conducted. Accordingly, in order to prevent unjust use of a work, if a broadcast business proprietor only broadcasts so as to include the information of the authentication key of an object to be invalidated and the authentication key for updating in the broadcast signal, the invalidating of the authentication key and the change thereof can be established simply.

In this manner, if the invalidating of the key in relation to the cryptology (the authentication key) and the change thereof are conducted by means of the information of the authentication key of an object to be invalidated and the authentication key for updating, which are provided together with the input data in relation to a broadcasted work such as a video data and an audio data, it becomes possible to conduct the invalidating of the key in relation to the cryptology and the change thereof all at once to a plurality of copyright protection systems in which the input data in relation to the said work are used. As a result, an advantage that a countermeasure against the unjust use of the said work can be conducted efficiently can be obtained.

Also, the broadcast business proprietor can broadcast so as to include a program for updating in the broadcast signal, which can update the respective processing programs (the first decryption processing program, the audio/video decode processing program, the authentication processing program and the authentication key updating processing program) of the first decryption section 11, the audio/video decode section 12, the authentication section 13 and the authentication key updating section 14 of the processing device 6. In this case, the broadcast reception device 1 outputs the received program for updating to the authentication key updating section 14, and the authentication key updating section 14 updates the respective processing programs by means of the program for updating. If the processing programs in the processing device 6 are updated in this manner, even in case that the said processing programs are unjustly falsified and used, it becomes possible to prevent further unjust use of the falsified processing programs.

Next, an operation will be explained, in which the copyright protection system shown in Fig. 1 receives the broadcast signal and records the contents of the broadcast, and also, regenerates the recorded broadcast contents. First, when receiving the broadcast signal, the broadcast reception device 1 outputs the compressed encrypted data, and the broadcast decryption device 2 decrypts the cryptology and outputs the compressed data.

Next, when receiving the compressed data from the broadcast decryption device 2, the second encrypting device 7 conducts encrypting by using the second cryptographic key, and outputs the second cryptographic data B1. The second encrypting device 7 generates the second cryptographic key by utilizing a random number or the like every time the encrypting is conducted, and holds it in the device 7. When receiving the second cryptographic data B1 from the second encrypting device 7, the record device 9 records it in a record medium.

In case that this recorded data is regenerated, first, the record device 9 reads out the second cryptographic data B2 from the record medium and outputs it. When receiving this second cryptographic data B2, the second decryption device 8 acquires the second cryptographic key used for the encrypting from the second encrypting device 7, and decrypts the cryptology of the second cryptographic data B2 and outputs it to the first encrypting device 3. Next, after the process in relation to the above-mentioned encrypting by means of the first cryptographic key is passed, the broadcast contents recorded by the record device 9 are regenerated by means of the audio/video decode section 12.

In addition, in the above-mentioned embodiment, although, as a method of providing the second cryptographic key to the second decryption device 8, the second encrypting device 7 generates the second cryptographic key by utilizing a random number or the like every time the encrypting is conducted, and holds this second cryptographic key in the device 7, the second cryptographic key can be recorded by the record device 9. However, in this case, it is required that the recorded second cryptographic key can be used in the system only. For example, different IDs (identification numbers) peculiar to every second encrypting device 7 and a result of a predetermined calculation with the second cryptographic key are added to the second cryptographic data B1 and recorded. In this case, the second decryption device 8 acquires from the second encrypting device 7 its ID, and restores and acquires the second cryptographic key by means of the calculation result added to the second cryptographic data B1 and the acquired ID.

If the second cryptographic key is provided to the second decryption device 8 by means of any of the above-described methods of providing the second cryptographic key, even though the record device 9 is removed from the copyright protection system shown in Fig. 1 and is attached to other copyright protection system having the same arrangement, it is difficult to obtain the correct second cryptographic key, and it becomes possible to make the regeneration impossible in a system other than the copyright protection system in which it is recorded. As a result, an advantage that unjust copying of a work itself is suppressed can be obtained.

In addition, by means of any of the above-described methods of providing the second cryptographic key, it may be possible to make the regeneration impossible in a system other than the copyright protection system in which it is recorded, or other method can be used. For example, authentication peculiar to a system can be required for the reading itself from the record medium.

Also, according to the above-mentioned embodiment, since the devices 7 to 9 in relation to the record and the devices 3 to 6 in relation to the regeneration are provided independently of each other, processing that is called a time shift can be conducted, in which the record processing and the regeneration processing are simultaneously conducted.

As mentioned above, according to this embodiment, since the different methods are used for the encrypting method (the method by means of the second cryptographic key) in the record and the encrypting method (the method by means of the first cryptographic key) in the regeneration, respectively, even though the first cryptology in the regeneration is deciphered and the record or regeneration of a work is unjustly conducted, it is possible to prevent the second cryptology in the record from being deciphered directly. Accordingly, by changing the key in relation to the first cryptology (the authentication key) in the regeneration, it is possible to prevent a work from being unjustly recorded or regenerated more than this. Also, with regard to the data recorded by the second cryptology, it is possible to regenerate it in a manner same as before.

As a result, an advantage that the copyright protection in relation to the record and regeneration can be executed without damaging the convenience of a user can be obtained.

In addition, in the above-mentioned embodiment, although the case where a work that was an object, copyright of which should be protected, was a video or audio, and the input data in relation to the work, which was an object to be encrypted, was a video data or an audio data, was explained as an example, it can be similarly applied to other work. For example, in case that a composition of a novel is to be a work that is an object, copyright of which should be protected, the input data in relation to the work can be applied as a text data.

Also, in the above-mentioned embodiment, although the case where the input data in relation to a work was included in the broadcast signal and was distributed was explained, the method of acquiring the input data in relation to the work is not limited to the case where it is distributed by a broadcasting form. For example, a user of the copyright protection system can acquire the input data in relation to a work by himself or herself via a communication network such as an internet. In this case, instead of the devices 1 and 2 in Fig. 1, a communication network connection device (a modem and a dial-up router or the like) and a decryption device in relation to its communication data are provided.

Otherwise, the input data in relation to a work can be acquired via a record medium. For example, a data of a work, which is recorded in a DVD can be the input data in relation to a work. In this case, instead of the devices 1 and 2 in Fig. 1, a reading out device for the DVD and a decryption device in relation to its read data are provided.

In addition, in the above-mentioned embodiment, the first encrypting device 3 of Fig. 1 is corresponding to the first encrypting means, and the first decryption section 11 is corresponding to the first decryption means. Also, the authentication device 4 is corresponding to the authentication means, and the contents described in the certificate revocation list D1 of the authentication device 4 are corresponding to the invalid information of the key in relation to the cryptology. Also, the certificate revocation list updating device 5 is corresponding to the invalid information updating means.

Also, the authentication key updating section 14 of the processing device 6 is corresponding to the authentication key updating means. Also, the processing device 6 is corresponding to the processing device that executes the processing programs for realizing the functions in relation to the decryption of the encrypting. Also, the respective processing programs (the first decryption processing program, the audio/video decode processing program, the authentication processing program and the authentication key updating processing program) of the first decryption section 11, the audio/video decode section 12, the authentication section 13 and the authentication key updating section 14 are corresponding to the processing programs for realizing the functions in relation to the decryption of the encrypting.

Also, the second encrypting device 7 is corresponding to the second encrypting means, and the second decryption device 8 is corresponding to the second decryption means.

Also, the copyright protection processing can be conducted by recording the programs for realizing each processing that the devices 3 to 8 shown in Fig. 1 conduct in a computer-readable record medium, and making a computer system read and execute the programs recorded in this record medium. In addition, the "computer system" mentioned here can be one including hardware such an OS and a peripheral equipment.

Also, if a WWW system is utilized, the "computer system" should include a homepage offering environment (or a display environment).

Also, the "computer-readable record medium" means a transportable medium such as aflexible disc, an optical magnetic disc, a ROM, a CD-ROM and a memory card, and a storage device such as a hard disc which is build in a computer.

Further, the "computer-readable record medium" includes one which holds a program for a fixed time period, such as a volatile memory (RAM) inside a computer system that becomes a server or a client in case that the program is transmitted via a network such as an internet or a communication circuit such as a telephone circuit.

Also, the above-described program can be transmitted to other computer system from the computer system in which this program is stored in a storage device or the like via a transmission medium or by means of a transmission wave in the transmission medium. Here, the "transmission medium" that transmits the program means a medium having a function for transmitting information, like a network (a communication network) such as an internet or a communication circuit (a communication line) such as a telephone circuit.

Also, the above-described program can be one for realizing a part of the above-mentioned functions. Further, it can be so called a differential file (a differential program), in which the above-mentioned functions can be realized by the combination with a program already recorded in the computer system.

Although the embodiment of the present invention has been mentioned above in detail by referring to the drawings, a particular arrangement is not limited to this embodiment, and a design change or the like within a scope that does not deviate from the gist of the present invention is contained.

As explained above, according to the present invention, the invalid information of the key in relation to cryptology is provided, and in case that the information of the authentication key is included in the invalid information, which is used for the authentication when the first cryptographic key in relation to the encrypting is shared between the first encrypting means and the first decryption means, the said authentication is disapproved. Also, when the information of the key of an object to be invalidated, which is provided together with the input data in relation to a work, the contents of the invalid information is updated. Thereby, it is possible to invalidate the key in relation to the cryptology within the system itself. Further, it becomes possible to conduct the invalidating of the key in relation to the cryptology all at once to a plurality of copyright protection systems in which the input data in relation to a work are used. As a result, an advantage that a countermeasure against the unjust use of the work can be conducted efficiently can be also obtained.

Further, if the authentication key is updated by means of the authentication key for updating, which is provided together with the input data in relation to a work, it is possible to simply change the key (the authentication key) in relation to the cryptology in a plurality of the copyright protection systems.

Also, if the program for updating, which is provided together with the input data in relation to a work, is received, and by means of this program for updating, the processing programs for realizing the functions in relation to the decryption for encrypting are updated, it is possible to simply change the programs in relation to the cryptology in a plurality of the copyright protection systems.

Also, if the input data in relation to a work is encrypted by using the second cryptographic key, and the said second cryptographic data is recorded in a record medium, it becomes possible to use different methods for the encrypting method (the method by means of the second cryptographic key) in the record and the encrypting method (the method by means of the first cryptographic key) in the regeneration, respectively, even though the first cryptology in the regeneration is deciphered and the record or regeneration of a work is unjustly conducted, it is possible to prevent the second cryptology in the record from being deciphered directly. Accordingly, by changing the key (the authentication key) in relation to the first cryptology in the regeneration, it is possible to prevent a work from being unjustly recorded or regenerated more than this. Also, with regard to the data recorded by the second cryptology, it is possible to regenerate it in a manner same as before.

As a result, an advantage that the copyright protection in relation to the record and regeneration can be executed without damaging the convenience of a user can be obtained.

Further, if the second cryptographic key is held within the system itself, and the cryptology of the second cryptographic data is decrypted by means of the second cryptographic key held within the system itself, it becomes impossible to regenerate the recorded data in a system other than the copyright protection system in which a work is recorded. As a result, an advantage that unjust copying of a work itself is suppressed can be obtained.

## Claims

1. A copyright protection system for encrypting an input data in relation to a work, and thereby, protecting a copyright of said work comprises:
authentication means having invalid information of a key in relation to cryptology, and for disapproving authentication in case that information of an authentication key is included in said invalid information, which is used for authentication when a first cryptographic key in relation to said encrypting is shared between first encrypting means and first decryption means; and
invalid information updating means for updating contents of said invalid information when receiving information of a key of an object to be invalidated, which is provided together with said input data.

2. A copyright protection system recited in claim 1, **characterized in that** the system comprises authentication key updating means for, when receiving an authentication key for updating, which is provided together with said input data, updating said authentication key.

3. A copyright protection system recited in claim 1 or 2, wherein the system comprises a processing apparatus for executing a processing program for realizing a function in relation to decryption of said encrypting, and
said processing apparatus updates said processing program when receiving a program for updating, which is provided together with said input data.

4. A copyright protection system recited in any of claim 1 to 3, wherein the system comprises second encrypting means for encrypting said input data using a second cryptographic key, and recording said second cryptographic data in a record medium.

5. A copyright protection system recited in claim 4, **characterized in that** the system comprises second decryption means for decrypting cryptology of said second cryptographic data by means of said second cryptographic key, and said second cryptographic key is held in the system itself.

6. A copyright protection method in a copyright protection system for encrypting an input data in relation to a work, and thereby, protecting a copyright of said work, **characterized in that** the method includes steps of:
conducting authentication when a first cryptographic key in relation to said encrypting is shared between first encrypting means and first decryption means; disapproving said authentication in case that information of an authentication key used for this authentication is included in invalid information in a key in relation to cryptology; and
updating contents of said invalid information when information of a key of an object to be invalidated, which is provided together with said input data, is received.

7. A copyright protection method recited in claim 6, **characterized in that** the method further includes a step of, when receiving an authentication key for updating, which is provided together with said input data, updating said authentication key.

8. A copyright protection method recited in claim 6 or 7, **characterized in that** the method further includes steps of:
receiving a program for updating, which is provided together with said input data; and
updating a processing program for realizing a function in relation to decryption of said encrypting by means of this program for updating.

9. A copyright protection method recited in claim 6, 7 or 8, **characterized in that** the method further includes steps of:
encrypting said input data using a second cryptographic key; and
recording said second cryptographic data in a record medium.

10. A copyright protection method recited in claim 9, **characterized in that** the method further includes steps of:
holding said second cryptographic key in the system itself; and
decrypting cryptology of said second cryptographic data by means of the second cryptographic key held in the system itself.

11. A copyright protection program for executing copyright protection processing in a copyright protection system for encrypting an input data in relation to a work, and thereby, protecting a copyright of said work, **characterized in that** the program makes a computer execute:
processing for conducting authentication when a first cryptographic key in relation to said encrypting is shared between first encrypting means and first decryption means;
processing for disapproving said authentication in case that information of an authentication key used for this authentication is included in invalid information in a key in relation to cryptology; and
processing for updating contents of said invalid information when information of a key of an object to be invalidated, which is provided together with said input data, is received.

12. A copyright protection program recited in claim 11, **characterized in that** the program further makes the computer execute:
processing for encrypting said input data using a second cryptographic key; and
processing for recording said second cryptographic data in a record medium.

13. A copyright protection program recited in claim 12, **characterized in that** the program further makes the computer execute:
processing for holding said second cryptographic key in the system itself; and
processing for decrypting cryptology of said second cryptographic data by means of the second cryptographic key held in the system itself.

14. A copyright protection program for executing copyright protection processing in a copyright protection system for encrypting an input data in relation to a work, and thereby, protecting a copyright of said work, **characterized in that** the program makes a computer execute:
processing for receiving an authentication key for updating, which is provided together with said input data, and updating the authentication key.

15. A copyright protection program recited in claim 14, **characterized in that** the program further makes the computer execute:
processing for receiving a program for updating, which is provided together with said input data; and
processing for updating a processing program for realizing a function in relation to decryption of said encrypting by means of this program for updating.

16. A record medium stored a copyright protection program for executing copyright protection processing in a copyright protection system for encrypting an input data in relation to a work, and thereby, protecting a copyright of said work, **characterized in that** the program makes a computer execute:
processing for conducting authentication when a first cryptographic key in relation to said encrypting is shared between first encrypting means and first decryption means;
processing for disapproving said authentication in case that information of an authentication key used for this authentication is included in invalid information in a key in relation to cryptology; and
processing for updating contents of said invalid information when information of a key of an object to be invalidated, which is provided together with said input data, is received.

17. A record medium stored a copyright protection program recited in claim 16, **characterized in that** the program further makes the computer execute:
processing for encrypting said input data using a second cryptographic key; and
processing for recording said second cryptographic data in a record medium.

18. A record medium stored a copyright protection program recited in claim 17, **characterized in that** the program further makes the computer execute:
processing for holding said second cryptographic key in the system itself; and
processing for decrypting cryptology of said second cryptographic data by means of the second cryptographic key held in the system itself.

19. A copyright protection program for executing copyright protection processing in a copyright protection system for encrypting an input data in relation to a work, and thereby, protecting a copyright of said work, **characterized in that** the program makes a computer execute:
processing for receiving an authentication key for updating, which is provided together with said input data, and updating the authentication key.

20. A record medium stored a copyright protection program recited in claim 19, **characterized in that** the program further makes the computer execute:
processing for receiving a program for updating, which is provided together with said input data; and
processing for updating a processing program for realizing a function in relation to decryption of said encrypting by means of this program for updating.
